# EUROPÄISCHE PATENTSCHRIFT

(11) **EP 2 207 698 B1**
(45) Veröffentlichungstag und Bekanntmachung des Hinweises auf die Patenterteilung: **04.05.2016**
(21) Anmeldenummer: 08847439.0
(22) Anmeldetag: 06.11.2008
(51) Int. Cl.: B60N 2/44, B60N 2/02

(54) **VERFAHREN UND VORRICHTUNG ZUM EINSTELLEN EINES SITZES**
METHOD AND DEVICE FOR ADJUSTING A SEAT
PROCÉDÉ ET DISPOSITIF DE RÉGLAGE D'UN SIÈGE

(30) Priorität: 08.11.2007 DE 102007053119
(43) Veröffentlichungstag der Anmeldung: 21.07.2010
(73) Patentinhaber: Bayerische Motoren Werke Aktiengesellschaft, 80809 München (DE)
(72) Erfinder: ZENK, Raphael, 96450 Coburg (DE); FRANZ, Matthias, 83098 Brannenburg (DE); DURT, Alexander, 82266 Inning (DE); LEIN, Rudolf, 85221 Dachau (DE)
(74) Vertreter: Schernhammer, Herbert
(86) Internationale Anmeldenummer: PCT/EP2008/009376
(87) Internationale Veröffentlichungsnummer: WO 2009/059768

(56) Entgegenhaltungen:
- DE-A1- 19 545 168
- DE-A1- 19 851 698
- FR-A- 2 754 497
- US-A1- 2005 264 069

## Beschreibung

Die Erfindung betrifft ein Verfahren und eine Vorrichtung zum Einstellen eines Sitzes.

DE 10 2004 062 084 B3 betrifft eine Vorrichtung zur selbsttätigen Anpassung eines Sitzes an den Fahrer eines Kraftfahrzeugs, wobei die von dem Fahrer gewählte Sitzeinstellung erfasst und mit gespeicherten Sollwerten verglichen wird. Die Anpassung der Istwerte an die Sollwerte erfolgt durch Komponenten des Sitzes selbst, in dem diese in Anlage an den Fahrer gebracht werden oder indem Werte mindestens eines personenspezifischen Parameters durch die Einwirkung des Fahrers auf die Sitzkomponente erzeugt werden. Dabei wird eine Sitzkomponente durch einen elektromotorischen Antrieb in Anlage an den Fahrer gebracht. Die Elektromotoren werden dabei so ausgelegt, dass sie bei einem vorgegebenen mechanischen Widerstand ab- oder umschalten.

Hierbei ist es von Nachteil, dass die vorgeschlagene Messung eine hohe Totzeit aufweist bis Rückschlüsse auf ein Körpermaß des Fahrers verfügbar sind. Aufgrund der mechanischen Verstellung muss stets abgewartet werden bis der Elektromotor einen hohen Strom zieht. Mit diesem Ansatz ist es ferner nicht möglich, eine Belastung des Sitzes durch den Nutzer entlang der weitgehend ebenen Flächen zu ermitteln. Darüberhinaus ist der Ansatz der Strommessung ungenau.

Die Aufgabe der Erfindung besteht darin, die vorstehend genannten Nachteile zu vermeiden und insbesondere eine Möglichkeit anzugeben, einen Sitz automatisch und effizient nach ergonomischen Gesichtspunkten an einen individuellen Nutzer anzupassen, wobei die Anpassung schnell und nach einem für den Nutzer unauffälligen Messvorgang erfolgen soll.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren angegeben zum Einstellen eines Sitzes abhängig von einem Druck, der von einem Nutzer auf den Sitz ausgeübt wird, wobei der Druck anhand mindestens eines pneumatischen Sensors und/oder mindestens eines hydraulischen Sensors ermittelt wird.

Insbesondere wird der Sitz in Abhängigkeit von einem Druckverhältnis eingestellt, das über wenigstens zwei pneumatische oder hydraulische Sensoren ermittelt wird.

Somit kann anhand des wenigstens einen Sensors schnell und unauffällig für den Nutzer eine Druckverteilung auf Lehne und/oder Sitzfläche(n) ermittelt werden. Diese Druckverteilung kann zur Einstellung des Sitzes, z.B. durch einen Vergleich mit Sollwerten, verwendet werden.

Erfindungsgemäss weist der Sitz mehrere pneumatische Sensoren und/oder hydraulische Sensoren auf, wobei mindestens ein pneumatischer Sensor mit mindestens einem pneumatischen Hubelement und/oder mindestens ein hydraulischer Sensor mit mindestens einem hydraulischen Hubelement verbunden ist. Der wenigstens eine Sensor ist dabei über eine Leitung mit dem wenigstens einem pneumatischen und/oder hydraulischen Hubelement fluidisch verbunden.

Das Hubelement hat somit eine Doppelfunktion, indem es einerseits entsprechend seiner hauptsächlichen Funktion als Stellelement wirkt, mit dem an der Anlagefläche eines Nutzers mit dem Sitz eine Stellbewegung aufgebracht wird, um beispielsweise eine Massagewirkung zu bezwecken. Andererseits fungiert das Hubelement als Druckaufnehmer, indem die vom Nutzer auf den Sitz aufgebrachte Anlagekraft eine Veränderung des Druckes im Inneren des Hubelements bewirkt. Dieser Innendruck des Hubelements wird durch einen Drucksensor erfasst.

Somit kann das erfindungsgemäße Verfahren mit minimalem Zusatzaufwand realisiert werden, da zusätzliche Druckaufnehmer, beispielsweise in Form einer in die Rückenlehne und/oder in das Sitzkissen eingenähten Sensormatte, nicht erforderlich sind.

Erfindungsgemäss wird das mindestens eine hydraulische Hubelement und/oder das mindestens eine pneumatische Hubelement mit einem vorgegebenen Füllstand belegt, bevor der Nutzer Druck auf den Sitz ausübt, d.h. insbesondere bevor der Nutzer in dem Sitz Platz nimmt.

Weiterhin erfindungsgemäss wird anhand des von dem Nutzer ausgeübten Drucks auf den Sitz ein aktuelles Druckprofil ermittelt, das mit einem vorgegebenen ergonomischen Druckprofil verglichen wird und der Sitz und/oder Komponente des Sitzes in Richtung des ergonomischen Druckprofils verstellt wird bzw. werden. Insbesondere kann das Druckprofil einer Druckverteilung entlang des Sitzbereichs entsprechen.

Insbesondere kann der Sitz derart automatisch verstellt werden, dass das ergonomische Sitzprofil erreicht wird. Auch ist es möglich, dass hierzu eine Regelung eingesetzt wird, die anhand der laufend aktualisierten Daten der Sensoren eine iterative Verstellung des Sitzes in Richtung des ergonomischen Sitzprofils durchführt.

Insbesondere kann eine Steuereinheit vorgesehen sein, anhand derer eine Erfassung der Daten der Sensoren sowie eine Ansteuerung der Hubelemente erfolgt. In der Steuereinheit ist wenigstens ein ergonomisches Druckprofil hinterlegt.

Ferner ist es eine Weiterbildung, dass der Füllstand des mindestens einen hydraulischen Hubelements und/oder des mindestens einen pneumatischen Hubelements nach Beendigung der Sitzverstellung zurückgesetzt wird. Hierbei kann der Füllstand auf einen vorherigen Wert zurückgesetzt werden. Alternativ kann das wenigstens eine Hubelement auch vollständig und/oder teilweise entleert werden.

Im Rahmen einer Weiterbildung wird die Sitzeinstellung beim Einsteigen in ein Fahrzeug und/oder beim Öffnen des Fahrzeugs und/oder beim Annähern an das Fahrzeug gestartet.

Beispielsweise kann bei Betätigung einer Fernbedienung zum Öffnen des Fahrzeugs bereits die Sitzeinstellung gestartet werden. Auch ist es in Verbindung mit einem schlüssellosen Zugangssystem möglich, dass die Annäherung des Nutzers an sein Fahrzeug automatisch erkannt und dementsprechend die Sitzeinstellung gestartet wird.

Ein solches Starten der Sitzeinstellung umfasst vorteilhaft die Vorbelegung der Hubelemente mit vorgegebenen Drücken.

Eine nächste Weiterbildung besteht darin, dass die Sitzeinstellung manuell oder automatisch während der Fahrt aktiviert wird.

Eine Ausgestaltung ist es, dass der Sitz ein elektrisch und/oder hydraulisch und/oder pneumatisch verstellbarer Sitz ist.

Dabei werden erfindungsgemäss eines oder mehrere der folgenden Sitzteile eingestellt:
- Sitzlänge;
- Sitzneigung, Sitzhöhe, Lehnenneigung;
- Lehnenkopf, Sitztiefe, Lehnenbreite;
- Lordose, Lordosentiefe, Lordosenhöhe;
- Kopfstütze.

Eine Lehnenkopfverstellung ist bei Rückenlehnen mit einer horizontal verlaufenden Knickachse möglich. Die Einstellung der Sitztiefe erfolgt durch die Verstellung einer Oberschenkelauflage.

In einer weiteren Ausgestaltung der Erfindung wird die Kopfstütze des Sitzes in einer Höhe und insbesondere entlang einer Längsachse in Fahrtrichtung verstellt.

Die Verstellmöglichkeiten des Sitzes können nacheinander oder in einer bestimmten Abfolge aufgerufen werden. Insbesondere ist es möglich, dass eine Gruppe von Verstellmöglichkeiten zu einer gemeinsamen (Teil-)Verstellung zusammengefasst werden: Z.B. können Sitzneigung, Sitzhöhe und Lehnenneigung (oder Lehnenkopf, Sitztiefe, Lehnenbreite) zusammen verstellt und somit kann die notwendige Dauer bzw. Adaption zur Einstellung des Sitzes insgesamt verkürzt werden.

Beispielsweise wird die automatische Sitzeinstellung wie folgt vorgenommen:
1. Sitzhöhenverstellung
2. Sitzneigungsverstellung
3. Lehnenneigungsverstellung
4. Lehnenkopfverstellung

Dieser automatischen Sitzeinstellung geht bevorzugt eine Voreinstellung der Sitzlängsposition durch den Nutzer oder der Abruf einer für einen individuellen Nutzer gespeicherten Einstellung der Sitzlängsposition voraus. Selbstverständlich kann jedoch auch die Sitzlängsverstellung im Rahmen des oben stehenden Ablaufs im Rahmen der erfindungsgemäßen automatischen Sitzeinstellung erfolgen.

Ein Nachjustieren bzw. eine Korrektur der Sitzposition erfolgt bevorzugt über die folgenden Parameter:
5. Sitzneigungsverstellung
6. Lehnenneigungsverstellung

Falls nach diesem Ablauf das ergonomische Sitzprofil noch nicht erreicht ist, beginnt der Ablauf wieder mit dem ersten Schritt.

Auch ist es eine Ausgestaltung, dass der Druck anhand mindestens eines von einem Hubelement unabhängigen weiteren Drucksensors ermittelt wird. Außerdem können weitere Sensoren jeglicher Art in dem Sitz oder in dem Fahrzeug vorgesehen sein, die zur Auswertung der Sitzposition und/oder des Fahrzustands damit zur Einstellung des Sitzes herangezogen werden.

In einer besonders bevorzugten Ausführung der Erfindung sind zwei Sensoren in unterschiedlichen, räumlich getrennten Bereichen der Rückenlehne vorgesehen. Die Sensoren stellen somit ein Paar von Ist-Druckwerten zur Verfügung, das an die Steuereinheit übermittelt wird. Aus diesen beiden Werten wird in der Steuereinheit ein Quotient errechnet und mit einem in der Steuereinheit hinterlegten Wert verglichen. Der hinterlegte Wert repräsentiert das Verhältnis der Druckwerte, das sich bei einem aus ergonomischen Gesichtspunkten richtig justierten Sitz einstellt. Im nächsten Schritt wird der Sitz - bevorzugt durch elektrische Antriebe - nach einem vorgegebenen Algorithmus verstellt, im Sinn einer Annäherung des Quotienten aus den beiden gemessenen Druckwerten (Ist-Quotient) an den hinterlegten Idealwert (Soll-Quotient). Mit dem Erreichen des Idealwertes wird die Verstellung des Sitzes beendet. Um die Dauer der Sitzverstellung zu verkürzen, ist es in der Praxis ausreichend, wenn der Idealwert innerhalb eines Toleranzfeldes erreicht wird.

Die beiden Bereiche der Rückenlehne, in denen der Druck erfasst wird, sind bevorzugt ein oberer und ein unterer Bereich der Rückenlehne.

In analoger Weise kann die Ermittlung eines Druckwerte-Quotienten auch in zwei unterschiedlichen, räumlich getrennten Bereichen des Sitzkissens erfolgen. Bevorzugt sind die Sensoren in einem vorderen und einem hinterem Bereich des Sitzkissens angeordnet.

In einer besonders bevorzugten Ausführung der Erfindung werden die Ist-Quotienten sowohl für die Rückenlehne als auch für das Sitzkissen ermittelt. Hierdurch werden "vertikale" und "horizontale" Druckverhältnisse gemessen, die nachfolgend mittels eines Regelalgorithmus in der Steuereinheit durch Verstellen des Sitzes und seiner Komponenten mit den in der Steuereinheit hinterlegten, idealen ergonomischen Druckverhältnissen (Soll-Quotienten) in Übereinstimmung gebracht werden.

Durch die Bildung eines Druckverhältnisses zwischen zwei unterschiedlichen Bereichen in der Rückenlehne und/oder im Sitzkissen arbeitet das erfindungsgemäße Verfahren losgelöst von Absolutwerten für den Druck. Damit wird die Messung vom Gewicht des Nutzers entkoppelt. Gewicht, Körperbau, Größe des Nutzers etc. spielen damit keine unmittelbare Rolle mehr. Somit ist es nicht erforderlich, in der Steuereinheit unterschiedliche absolute Druckwerte zu hinterlegen, die einer idealen ergonomischen Einstellung des Sitzes und seiner Komponenten entsprechen.

Zwar kann durch eine größere Anzahl von Druckaufnehmern und Drucksensoren die Sitzeinstellung präziser vorgenommen werden, jedoch ist bei jeweils zwei Sensoren in der Rückenlehne und im Sitzkissen bereits eine ausreichend genaue Sitzeinstellung möglich.

Nach dem Erreichen der ergonomisch richtigen Sitzeinstellung kann der Fülldruck in den Hubelementen zurückgesetzt werden. Damit endet die Phase, in der die Hubelemente als Druckaufnehmer eingesetzt sind. Somit können die Hubelemente wieder für ihre eigentliche Funktion verwendet werden.

Üblicherweise sind Hubelemente im rechten und im linken Teil der Rückenlehne und/oder des Sitzkissens vorgesehen. In einer bevorzugten Ausgestaltung der Erfindung wird der von einem Nutzer auf entsprechende Hubelemente im rechten und im linken Teil des Sitzes ausgeübte Druck durch einen gemeinsamen Drucksensor erfasst. Versuche haben ergeben, dass hierdurch eine ausreichend präzise Sitzeinstellung erreicht wird, die auch ein außermittiges Einsitzen oder Abstützen des Nutzers im Sitz berücksichtigt.

Zur Klarstellung wird darauf hingewiesen, dass die Hubelemente nicht der Einstellung des Sitzes im Sinn einer Veränderung der Kontur des Sitzes dienen, sondern lediglich (für eine begrenzte Zeitdauer) Druckaufnehmer sind, aufgrund deren Rückmeldung der Sitz von unabhängigen (bevorzugt elektrischen) Stellantrieben in seine Soll-Position gebracht wird.

Die vorstehend genannte Aufgabe wird auch gelöst durch eine Vorrichtung zur Anpassung eines Sitzes umfassend eine Steuereinheit, die derart eingerichtet ist, dass das hierin beschriebene Verfahren auf der Steuereinheit ausführbar ist.

Vorstehend genannte Steuereinheit kann dabei mindestens einen Chip, insbesondere einen Mikroprozessor und/oder einen Mikrocontroller umfassen. Auch kann es sich dabei um mindestens einen ASIC ("application specific integrated circuit") o.ä. handeln.

Die Vorrichtung zur Einstellung des Sitzes kann integraler Bestandteil des Sitzes oder separat, ggf. in einer zentralisierten Steuereinheit, realisiert sein.

Es wird insbesondere eine automatische Sitzkomforteinstellung vorgeschlagen, die mittels pneumatischer Sensoren insbesondere in den Bereichen der Sitzfläche und Rückenlehne eine Druckverteilung eines Nutzers in dem Sitz ermittelt.

Hierbei ist es von Vorteil, dass z. B. Massagesitze oder Sitze wie in der DE 197 26 409 A1 beschrieben oftmals über Hubelemente verfügen, die an Drucksensoren gekoppelt sind, um eine Überlastung oder Fehlfüllung auszuschließen. Diese Drucksensoren können als die vorstehend erwähnten Sensoren eingesetzt werden.

Bevorzugt werden zunächst die Hubelemente vorgefüllt. Dies kann automatisiert geschehen, sobald ein Nutzer sich dem Fahrzeug nähert, dieses öffnet oder eine Türe zu einem Sitz des Fahrzeugs öffnet.

Abhängig von Größe, Gewicht, Körperbau und Position des Nutzers, der in dem Sitz Platz nimmt, werden unterschiedliche Drücke anhand der vorgefüllten Hubelemente über den wenigstens einen Sensor registriert.

Die Druckverteilung des Nutzers in dem Sitz kann somit bestimmt werden. Diese Druckverteilung wird mit einer unter ergonomischen Gesichtspunkten günstigen Druckverteilung verglichen. Insbesondere kann dabei die Druckverteilung der Hubelemente zueinander ins Verhältnis gesetzt und mit einer vorab bestimmten und abgespeicherten Druckverteilung verglichen werden. Dieser Vergleich liefert eine Differenz, die insbesondere anhand der Verstellmöglichkeiten des Sitzes ausgeglichen werden kann.

Vorzugsweise wird für eine solche Sitzeinstellung eine bestimmte Zeitdauer vorgegeben, währenddessen der Sitz an die vorabgespeicherte Druckverteilung angepasst wird. Nach dieser Zeitdauer wird vorteilhaft die Einstellung bzw. Adaption beendet. Alternativ kann die Adaption regelmäßig oder kontinuierlich an die Sitzposition des Nutzers erfolgen. Insbesondere kann bei Veränderung der Position in dem Sitz für den Nutzer schnell eine adaptierte ergonomische Einstellung gefunden werden.

Optional kann, z. B. während einer länger andauernden Fahrt, die Sitzverstellung automatisch oder manuell gestartet werden.

Nachfolgend werden weitere Erläuterungen zur Erfindung gegeben.

Bei der Verwendung von Sitzen, die eine Vielzahl von Verstellmöglichkeiten aufweisen, ist der Nutzer oft überfordert, die richtige bzw. für ihn passende Einstellung zu finden. Darüber hinaus kann es vorkommen, dass sich eine von dem Nutzer zunächst als bequem empfundene Sitzposition nach längerem Sitzen als unbequem oder nicht ergonomisch herausstellt.

Das erfindungsgemäße Verfahren erlaubt es, dass für den Nutzer eines Sitzes eine ergonomische Sitzposition automatisch eingestellt wird, ohne dass der Nutzer die Verstellmöglichkeiten des Sitzes kennen oder erlernen muss. Ebenso wenig muss der Nutzer wissen, welche Sitzposition unter ergonomischen Gesichtspunkten vorteilhaft ist.

Somit wird für den Nutzer automatisch eine Sitzposition eingestellt, die einen hohen Sitzkomfort über einen langen Zeitraum ermöglicht.

Die Einstellung des Sitzes anhand der Messung des Druckes, der von einem Nutzer auf den Sitz ausgeübt wird, mit daraus abgeleiteter Lastverteilung, ist für den Nutzer mit einem hohen Komfort verbunden.

Die Einstellzeiten des Sitzes sind kurz, insbesondere wegen der hohen Empfindlichkeit der befüllten Hubelemente, die eine schnelle Feststellung der Druckverteilung ermöglichen.

Der hier vorgestellte Ansatz ermöglicht weiterhin eine gesamtheitliche Einstellung des Sitzes über eine Vielzahl von Perzentilgrößen und Anthropometrien.

Die bereitgestellte Funktionalität ist weltweit für unterschiedliche Körperformen, insbesondere auch bei alters- oder krankheitsbedingter Rückratsverformung einsetzbar.

Insbesondere kann die Einstellung der Sitzposition anhand einer aus medizinischer sowie ergonomischer Sicht optimalen Gewebedruckverteilung erfolgen.

Neben der beschriebenen automatisierten Einstellung zum Erreichen einer dauerhaft bequemen und unter ergonomischen sowie fahrsicherheitsrelevanten Gesichtspunkten günstigen Sitzposition besteht unverändert die Möglichkeit für den Nutzer, manuell Änderungen an der Sitzverstellung vorzunehmen.

Sitze zur Durchführung des erfindungsgemäßen Verfahrens eignen sich zum Einsatz in jeder Art von Fahrzeug, insbesondere in einem Kraftfahrzeug. Dabei kann es sich um einen Fahrersitz, einen Beifahrersitz oder um einen sonstigen Passagiersitz handeln.

Mögliche Ausführungsbeispiele der Erfindung werden nachfolgend anhand der Fig. 2 bis 4 dargestellt und erläutert.

Es zeigen:
- Fig. 1: einen Fahrzeugsitz nach dem Stand der Technik,
- Fig. 2: eine erste Ausführungsform eines Fahrzeugsitzes zur Durchführung des erfindungsgemäßen Verfahrens,
- Fig. 3: eine zweite Ausführungsform eines Fahrzeugsitzes zur Durchführung des erfindungsgemäßen Verfahrens und
- Fig. 4: ein Diagramm umfassend Druckverläufe an Drucksensoren während unterschiedlicher Phasen zur Einstellung einer Druckverteilung zur Erreichung einer ergonomischen Sitzposition für einen Nutzer.

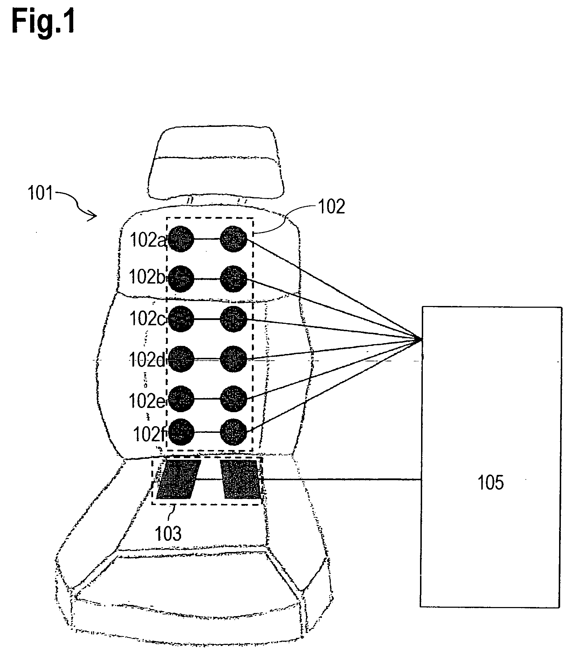

Fig. 1 zeigt einen in seiner Gesamtheit mit 101 bezeichneten Fahrzeugsitz, wie er beispielsweise aus der WO 2007/121874 A1 bekannt ist. Der Sitz 101 umfasst pneumatische Hubelemente 102, die in der Rückenlehne vorzugsweise unterhalb des Sitzbezugs angeordnet sind. Beispielhaft sind in Fig.1 in der Rückenlehne des Sitzes 101 zwölf pneumatische Hubelemente 102a bis 102f, jeweils paarweise, vorgesehen. Die Hubelemente 102a bis 102f sind als Massagevorrichtungen ausgebildet.

In der Sitzfläche des Sitzes 101, vorzugsweise unterhalb des Sitzbezugs im Bereich der Sitzbeinhöcker des Nutzers, sind zwei Hubelemente 103 vorgesehen, die eine Mobilisation der Wirbelsäule des Nutzers bewirken.

Die Hubelemente 102a bis 102f und 103 werden von einer Steuereinheit 105 angesteuert.

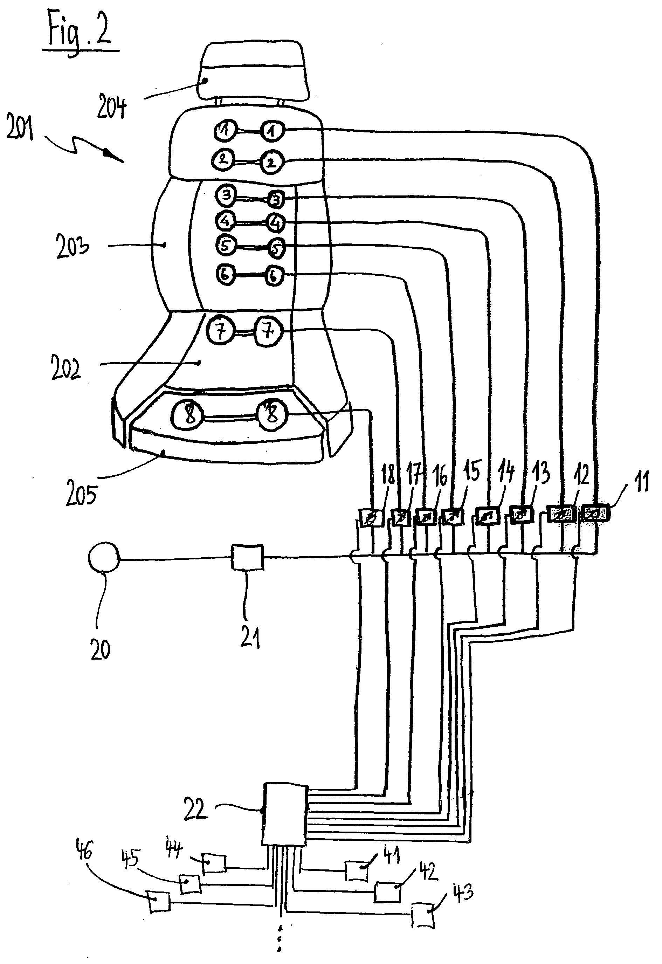

Fig. 2 zeigt eine erfindungsgemäße Vorrichtung zur Durchführung des Verfahrens, mit einem in seiner Gesamtheit mit 201 bezeichneten Sitz, der ein Sitzkissen 202, eine Rückenlehne 203, eine Kopfstütze 204 und eine Oberschenkelauflage 205 als Teil des Sitzkissens 202 aufweist. In der Rückenlehne 203 sind sechs Paare von Hubelementen 1 bis 6 übereinander angeordnet. Im Sitzkissen 202 sind zwei Paare von Hubelementen 7 und 8 vorgesehen. Die Hubelemente 1 bis 6 dienen der Massage, während die Hubelemente 7 zur Mobilisation der Wirbelsäule eingesetzt werden. Insoweit entspricht der Aufbau des Sitzes 201 dem bekannten Sitz aus Fig. 1. Zusätzlich sind in der Oberschenkelauflage die Hubelemente 8 vorgesehen, zum Zweck der Massage.

Eine pneumatische Pumpe 20 beaufschlagt über ein Ventil 21 die Paare von Hubelementen 1 bis 8, unter Zwischenschaltung von Drucksensoren 11 bis 18. Die Drucksensoren 11 bis 18 haben außerdem jeweils eine Drosselfunktion, zur Regelung des Druckes in den Hubelement-Paaren 1 bis 8.

Die Drucksensoren 11 bis 18 sind über elektrische Leitungen mit einer Steuereinheit 22 verbunden. Die Steuereinheit 22 wirkt auf die Drosseln in den Drucksensoren 11 bis 18 und steuert somit den Hub der Hubelement-Paare 1 bis 8.

Zur Durchführung des erfindungsgemäßen Verfahrens ist die Steuereinheit 22 so ausgebildet, dass sie folgende Funktionen ausführt:
- Aufbringen eines Vordruckes von beispielsweise ca. 80 mbar in den Hubelementen 1 bis 8 und nachfolgendes Sperren der Drosseln in den Drucksensoren 11 bis 18, so dass der Vordruck in den Hubelementen 1 bis 8 gehalten wird
- Messung des Druckes, der sich in den einzelnen Hubelement-Paaren 1 bis 8 nach dem Einsitzen eines Nutzers einstellt
- Vergleich der gemessenen Druckwerte (Ist-Werte) mit in der Steuereinheit 22 hinterlegten Idealwerten (Soll-Werte), die eine ergonomische Sitzeinstellung repräsentieren, beispielsweise mit einer Taktfrequenz von etwa 5 Hz
- Ansteuerung von Sitzverstellantrieben 41 bis 46 (zur Verstellung des gesamten Sitzes 201, des Sitzkissens 202, der Rückenlehne 203, der Kopfstütze 204, der Oberschenkelauflage 205, der Seitenwangen, der Lordosenstütze, etc.) nach einem vorgegebenen Algorithmus
- Erfassung der Druckwerte an den Drucksensoren 11 bis 18 während der Ansteuerung der Sitzverstellantriebe 41 bis 46 und Vergleich der gemessenen Druckwerte mit den hinterlegten Idealwerten
- Darstellung eines geschlossenen Regelkreises, durch den die Sitzverstelleinheiten 41 bis 46 angesteuert werden, um die von den Drucksensoren 11 bis 18 erfassten Werte (gegebenenfalls innerhalb eines vorgegebenen Toleranzbandes) an die hinterlegten Idealwerte anzunähern

Beispielsweise kann beim Öffnen einer Fahrzeugtüre über einen Türkontaktschalter die Sitzverstellung des sich hinter dieser Türe befindlichen Sitzes 201 gestartet werden. Die pneumatischen Hubelemente 1 bis 8 werden mit einem Druck von ca. 50 mbar (5000 Pa) bis 100 mbar (10000 Pa) befüllt. Hierfür kann eine Zeitdauer von ca. 0,5 s bis 3 s vorgesehen sein (Phase 1).

Daraufhin nimmt der Nutzer in dem Sitz 201 Platz und erzeugt anhand seines Gewichts, seiner Größe und seiner anatomischen sowie physiologischen Eigenheiten eine Druckveränderung in den vorgefüllten Hubelementen 1 bis 8. Diese Druckveränderung wird über die Drucksensoren 11 bis 18 registriert (Phase 2). Hierbei ist es besonders von Vorteil, dass durch die Vorabbefüllung der Hubelemente 1 bis 8 die an die Hubelemente 1 bis 8 angeschlossenen Drucksensoren 11 bis 18 sehr empfindlich gegenüber Druckveränderungen sind, d. h. die Druckverteilung des Nutzers kann entsprechend schnell und mit hoher Genauigkeit ermittelt werden.

Über die Steuereinheit 22 werden also einerseits die Hubelemente 1 bis 8 befüllt und andererseits nachfolgend die Druckveränderungen über die Drucksensoren 11 bis 18 registriert. Die Steuereinheit 22 weist weiterhin einen Speicher auf, der mindestens ein Profil oder Verhältnis für eine ergonomische Druckverteilung enthält. Insbesondere können mehrere solche Profile oder Verhältnisse in dem Speicher abgelegt sein, abhängig von beispielsweise bestimmten physiologischen Parametern oder Fahrprofilen.

Bevorzugt werden nicht die gemessenen Absolutdrücke an den Drucksensoren 11 bis 18 für die automatisierte Sitzeinstellung herangezogen, sondern Quotienten aus den gemessen Drücken an den Hubelement-Paaren 1 bis 8. Diese Quotienten aus den gemessenen Druckwerten werden mit idealen Quotienten, die eine ergonomische Sitzeinstellung repräsentieren, verglichen. Hierdurch wird ein Regelprozess in Gang gesetzt, der erst dann beendet ist, wenn die Quotienten aus den Messwerten mit den hinterlegten Quotienten übereinstimmen, zumindest innerhalb eines vorgegebenen Toleranzbandes.

Im Einzelnen wird die Druckveränderung beim Sitzen mittels der Steuereinheit 22 durch Abgleich zu dem Vordruck registriert und dadurch eine tatsächlich durch das Sitzen erzeugte Druckverteilung des Nutzers ermittelt. Weicht diese Druckverteilung von einer vorgegebenen (z. B. ergonomischen) Druckverteilung ab, wird in der Phase 3 von der Steuereinheit 22 eine Einstellung (z. B. mittels eines Regelkreises) vorgenommen, um innerhalb einer vorgegebenen Zeit eine Druckverteilung zu erreichen, die möglichst nahe an den vorgegebenen Parametern (Sollvorgabe gemäß Speicher) liegt.

Vorzugsweise handelt es sich bei dem Sitz 201 um einen elektrisch, hydraulisch und/oder pneumatisch verstellbaren Sitz. Beispielhaft weist der Sitz die folgenden Verstellmöglichkeiten auf:
- Sitzlängsverstellung;
- Sitzneigungsverstellung;
- Sitzhöhenverstellung;
- Lehnenneigungsverstellung;
- Lehnenkopfverstellung;
- Sitztiefenverstellung;
- Lehnenbreitenverstellung;
- Kopfstützenverstellung in der Höhe sowie in Längsrichtung (Fahrtrichtung);
- Verstellung einer Lordose, z. B. einer Lordosentiefe und oder einer Lordosenhöhe.

Die Einstellung des Sitzes 201 wird durch die Steuereinheit 22 angestoßen, so dass über die vorstehend genannten Verstellmöglichkeiten für den Nutzer eine ergonomische Druckverteilung gemäß einem abgespeicherten Profil erreicht werden kann.

Insbesondere ist es möglich, dass der Sitz 201 anhand der Verstellmöglichkeiten bereits vorab in eine vorgegebene Position bewegt wird, von der ausgehend eine weitere Anpassung an die individuellen Parameter des Nutzers keine allzu großen Verstellungen des Sitzes 201 mehr erfordert. Hierbei kann eine vorab gespeicherte Sitzposition aufgerufen werden, sobald z. B. die Türe des Fahrzeugs geöffnet wird.

Nachdem sich der Nutzer in den Sitz 201 gesetzt hat, kann die Verstellung des Sitzes beispielsweise schrittweise nach folgender Gewichtung erfolgen:
1. Sitzlängenverstellung;
2. Sitzneigungsverstellung, Sitzhöhenverstellung, Lehnenneigungsverstellung;
3. Lehnenkopfverstellung, Sitztiefenverstellung, Lehnenbreitenverstellung;
4. Kopfstützenverstellung in der Höhe sowie in Längsrichtung (Fahrtrichtung)
5. Verstellung der Lordose

Vorzugsweise können mindestens zwei bis fünf Iterationen für die Regelung vorgesehen sein, die in einem Zeitrahmen von ca. 3 s bis 9 s durchgeführt werden.

Nach Ablauf des vorgegebenen Zeitrahmens ist die Einstellung beendet, vorzugsweise werden die Hubelemente 1 bis 8 zumindest teilweise wieder entleert (siehe Phase 4), die ergonomische Sitzposition ist eingestellt.

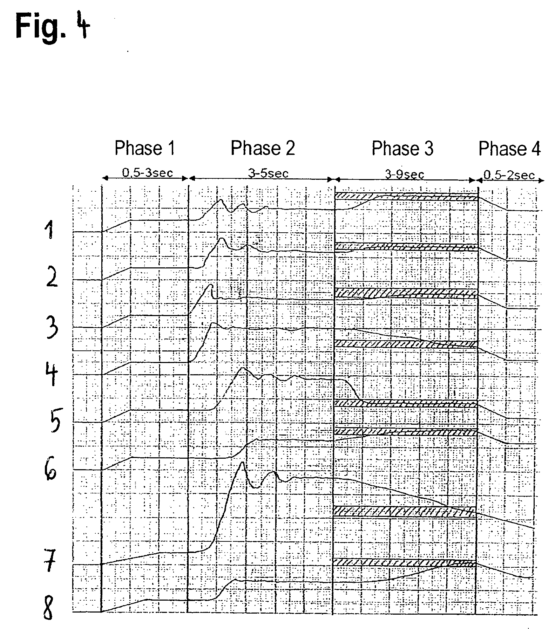

Die vorstehend beschriebenen Phasen 1 bis 4 sind in Fig. 4 dargestellt für die Hubelemente 1 bis 8 des Sitzes 201 als Druckverläufe pro Hubelement-Paar 1 bis 8. Während der Phase 1 erfolgt über einen Zeitraum von 0,5 s bis 3 s eine Befüllung der Hubelemente 1 bis 8. Die Phase 2 entspricht dem Einsitzen des Nutzers. Hierfür kann eine Zeitdauer von 3 s bis 5 s angesetzt werden. In der Phase 3 wird der Sitz 201 so verstellt, dass für den Nutzer eine ergonomische Druckverteilung (gemäß einem abgespeicherten Druckprofil) erreicht wird. Diesbezüglich sind in Fig. 4 schraffierte Bereiche dargestellt, die nach Möglichkeit durch Verstellung des Sitzes 201 erreicht werden sollen (vorgegebene Soll-Druckwerte für den jeweiligen Sitzbereich). Vorzugsweise kann diese Einstellung zwischen 3 s und 9 s dauern. Nach Beendigung der Einstellung werden die Hubelemente 1 bis 8 in der Phase 4 zumindest teilweise entleert oder auf einen anderen vorgegeben Druck eingestellt. Dies dauert vorzugsweise zwischen 0,5 s und 2 s.

Hierbei sei angemerkt, dass die vorstehend genannten Hubelemente 1 bis 8 als pneumatische ansteuerbare Blasen und/oder als hydraulische füllbare bzw. entleerbare Behältnisse ausgeführt sind. Insbesondere ist es hierbei von Vorteil, dass bereits in dem Sitz 201 vorhandene Hubelemente 1 bis 8 genutzt werden können.

Ein erneutes Einstellen des Sitzes 201 an die vorgegebene ergonomische Sitzposition kann weiterhin erfolgen
- über eine manuelle Aktivierung eines Nutzers (bei Bedarf);
- nach einer Verriegelung des Fahrzeugs oder nach erneutem Öffnen der Fahrzeugtüre;
- nach Ablauf einer vorgegebenen Zeitdauer;
- nach einer Umstellung des Fahrmodus (z. B. von komfortabel zu sportlich).

Insbesondere können mehrere Profile (Druckverteilungen) abgespeichert sein. Abhängig von einer Voreinstellung oder vom Fahrzeugtyp oder einer Auswahl des Fahrers kann die ergonomisch günstige Sitzposition eher nach Komfortgesichtspunkten oder für ein sportlicheres Fahrprofil eingestellt werden. Z. B. ist es im Rahmen des sportlicheren Fahrprofils möglich, dass der Sitz 201 dem Nutzer einen stärkeren Seitenhalt gibt.

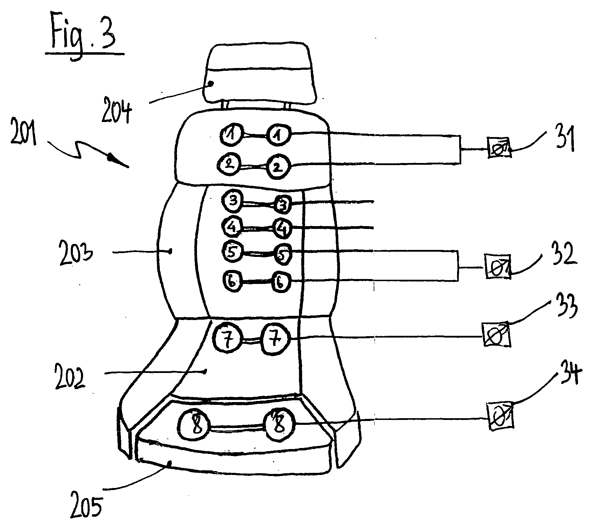

In einer besonders bevorzugten Ausführung der Erfindung gemäß Fig. 3 ist die Anzahl der Sensoren reduziert. Hierbei sind zwei Sensoren 31 und 32 vorgesehen, die den Hubelement-Paaren 1 und 2 bzw. den Hubelement-Paaren 5 und 6 zugeordnet sind. Damit wird in zwei räumlich voneinander getrennten Bereichen der Rückenlehne 203 der von einem Nutzer aufgebrachte Anlagedruck am Sitz 201 erfasst. Durch die Zusammenfassung der beiden obersten Hubelement-Paare 1 und 2 und der beiden untersten Hubelement-Paare 5 und 6 wird ein mittlerer Druck im oberen und im unteren Bereich der Rückenlehne 203 ermittelt. In analoger Weise sind den Hubelement-Paaren 7 und 8 im Sitzkissen 202 die Sensoren 33 und 34 zugeordnet, wodurch der Druck erfasst werden kann, den ein Nutzer auf den hinteren und den vorderen Bereich des Sitzkissens 202 aufbringt.

Vor dem Einsitzen eines Nutzers werden die Hubelemente 1 bis 8 mit einem vorgegebenen Fülldruck ("Vordruck") beaufschlagt. Mit dem Einsitzen des Nutzers liegt dessen Rücken an der Rückenlehne 203 und damit an den Hubelementen 1 bis 6 an und verändert den Druck in jedem einzelnen der Hubelemente 1 bis 6. Die beiden Sensoren 31 und 32 erfassen den Druck als Durchschnittswert der Drücke der vier oberen Hubelemente 1 und 2 bzw. der vier unteren Hubelemente 5 und 6. Die Sensoren 31 und 32 stellen somit zwei Druckwerte zur Verfügung, die an die Steuereinheit 22 übermittelt werden. Aus diesen beiden Werten für den kumulierten Druck im oberen und im unteren Drittel der Rückenlehne 203 wird ein Quotient errechnet. Dieser Quotient wird mit einem in der Steuereinheit 22 hinterlegten Wert verglichen. Der hinterlegte Wert repräsentiert dasjenige Verhältnis der Druckwerte von oberem zu unteren Rückenlehnendrittel, das sich bei einem aus ergonomischen Gesichtspunkten richtig justierten Sitz 201 einstellt.

In gleicher Weise wird aus dem von den Sensoren 32 und 33 ermittelten Druck in der hinteren und der vorderen Hälfte des Sitzkissens 202 mittels der Steuereinheit 22 ein Quotient errechnet und mit einem in der Steuereinheit 22 hinterlegten Idealwert für eine ergonomische Sitzposition verglichen.

Im nächsten Schritt wird der Sitz 201 - bevorzugt durch elektrische Antriebe - nach einem vorgegebenen Algorithmus verstellt, im Sinn einer Annäherung der Quotienten für die Druckverteilung in der Rückenlehne 203 und des Sitzkissens 202 an die in der Steuereinheit 22 hinterlegten Idealwerte dieser Quotienten. Mit dem Erreichen der Idealwerte wird die Verstellung des Sitzes 201 beendet.

Nun kann der Fülldruck in den Hubelementen 1 bis 8 abgelassen werden. Damit endet die Phase, in der die Hubelemente 1 bis 8 als Druckaufnehmer eingesetzt sind. Somit können die Hubelemente 1 bis 8 für ihre eigentliche Funktion zur Massage und/oder zur Mobilisation der Wirbelsäule eingesetzt werden.

Zur Realisierung der beiden Funktionen "Druckerfassung zur automatischen Sitzeinstellung" und "Massage und/oder Mobilisation" ist eine geeignete Ventilsteuerung vorzusehen, die in den Fig. 2 und 3 nicht dargestellt ist. Beispielsweise kann für die Ansteuerung der Hubelemente 1 bis 8 zu "Massage- und/oder Mobilisationszwecken" wenigstens ein Drehschieberventil vorgesehen sein, das für die Realisierung der Funktion "Druckerfassung zur automatischen Sitzeinstellung" zusätzliche Bohrungen im Drehschieber aufweist. Es sei an dieser Stelle nochmals erwähnt, dass die beiden genannten Funktionen nicht gleichzeitig, sondern nur alternativ durchgeführt werden können.

Selbstverständlich kann in einem vorgegebenen Turnus und/oder auf Anforderung des Nutzers und/oder bei veränderten Fahrzuständen die Massage- und/oder Mobilisationsfunktion unterbrochen werden, um erneut eine Druckmessung in den beiden Bereichen der Rückenlehne 203 und des Sitzkissens 202 vorzunehmen und die Position des Sitzes 201 nachzujustieren.

Die Druckverhältnisse an den Hubelement-Paaren 3 und 4 im mittleren Bereich der Rückenlehne 203 spielen in der Mehrzahl der Fälle für das oben beschriebene Verfahren nur eine untergeordnete Bedeutung, so dass eine Erfassung des Anlagedruckes des Nutzers durch die beiden obersten Hubelement-Paare 1 und 2 sowie durch die beiden untersten Hubelement-Paare 5 und 6 für eine präzise automatisierte Einstellung des Sitzes 201 ausreichend ist.

Die Hubelemente 7 und 8 im Sitzkissen 202 können - ebenso wie die Hubelemente 1 bis 6 in der Rückenlehne 203 - als Einrichtungen zur Erzielung eines Massageeffekts ausgebildet sein. Bevorzugt ist jedoch das Hubelemente-Paar 7 zur Erzielung einer Mobilisation der Wirbelsäule vorgesehen, wie an sich aus der DE 197 26 409 A1 und der WO 2007/121874 A1 bekannt. Selbstverständlich ist es jedoch auch möglich, mit den Hubelementen 1 bis 6 in der Rückenlehne 203 eine Mobilisation der Wirbelsäule zu bewirken.

Um das erfindungsgemäße Verfahren ausüben zu können, ist also bei einem Sitz 201 mit Hubelementen 1 bis 8 (beispielsweise zu Massage- und/oder Mobilisationszwecken) eine entsprechende Anzahl von Drucksensoren 11 bis 18 bzw. 31 bis 34 zur Erfassung der Druckwerte erforderlich sowie die Hinterlegung von Sollwerten in der Steuereinheit 22, mit einem zugehörigem Algorithmus zur Einstellung des Sitzes 201. Somit ergibt sich mit minimalem zusätzlichem Aufwand eine vollkommen neue Funktionalität des Sitzes 201.

Zusammenfassend lässt sich eine besonders bevorzugte Ausgestaltung der Erfindung wie folgt beschreiben:
Bei einem erfindungsgemäßen Verfahren zur selbsttätigen Einstellung eines Sitzes 201 werden Hubelemente 1 bis 8, die dazu bestimmt sind, auf die Anlagefläche eines Nutzers mit dem Sitz 201 eine Stellbewegung aufzubringen, als Druckaufnehmer eingesetzt. Die Hubelemente 1 bis 8 stehen mit Sensoren 11 bis 18 bzw. 31 bis 34 in Verbindung, die den Druck an den Hubelementen 1 bis 8 erfassen. Nach dem Einsitzen des Nutzers in den Sitz 201 messen die Sensoren 11 bis 18 bzw. 31 bis 34 den Druck an den Hubelementen 1 bis 8, der sich unter der Einwirkung des Nutzers auf dem Sitz 201 ergibt. Diese erfassten Ist-Druckwerte werden mit Soll-Druckwerten verglichen, die in einer Steuereinheit 22 hinterlegt sind. Die Soll-Druckwerte repräsentieren eine Druckverteilung, die sich bei einer ergonomisch idealen Einstellung des Sitzes 201 und/oder seiner Komponenten ergibt. Durch einen Regelalgorithmus in der Steuereinheit 22 wird der Sitz 201 und/oder wenigstens eine Komponente des Sitzes 201 so verstellt, dass sich die Ist-Druckwerte den Soll-Druckwerten annähern.

Für das Verfahren sind bevorzugt wenigstens zwei Hubelemente 1 bis 8 und zwei Sensoren 11 bis 18 bzw. 31 bis 34 vorgesehen. In einer besonders bevorzugten Ausführung der Erfindung sind jeweils wenigstens zwei Hubelemente 1 bis 8 und zwei Sensoren 11 bis 18 bzw. 31 bis 34 in unterschiedlichen Bereichen sowohl der Rückenlehne 203 als auch des Sitzkissens 202 vorgesehen.

In bevorzugter Ausgestaltung der Erfindung wird der Quotient aus den Ist-Druckwerten ermittelt, die sich an wenigstens zwei Hubelementen 1 bis 8 nach dem Einsitzen eines Nutzers einstellen, wobei die Hubelemente 1 bis 8 in unterschiedlichen Bereichen des Sitzes 201 platziert sind. Anschließend wird der Sitz 201 und/oder wenigstens eine Komponente des Sitzes 201 mittels einer Steuereinheit 22 (mit hinterlegten Quotienten aus Soll-Druckwerten, die eine ergonomische Sitzeinstellung repräsentieren) so verstellt, dass sich der Quotient bzw. die Quotienten aus den Ist-Druckwerten dem bzw. den Quotienten aus den Soll-Druckwerten annähert bzw. annähern.

## Patentansprüche

1. Verfahren zum Einstellen eines Sitzes (201)
- abhängig von einem Druck, der von einem Nutzer auf den Sitz (201) ausgeübt wird,
- wobei der Druck anhand mindestens eines pneumatischen Sensors (11 bis 18; 31 bis 34) und/oder mindestens eines hydraulischen Sensors (11 bis 18; 31 bis 34) ermittelt wird,
- bei dem das mindestens eine hydraulische Hubelement (1 bis 8) und/oder das mindestens eine pneumatische Hubelement (1 bis 8) mit einem vorgegebenen Füllstand belegt wird, bevor der Nutzer den Druck auf den Sitz (201) ausübt,
- bei dem der Sitz (201) mehrere pneumatische Sensoren (11 bis 18; 31 bis 34) und/oder hydraulische Sensoren (11 bis 18; 31 bis 34) aufweist, wobei mindestens ein pneumatischer Sensor (11 bis 18; 31 bis 34) mit mindestens einem pneumatischen Hubelement (1 bis 8) und/oder mindestens ein hydraulischer Sensor (11 bis 18; 31 bis 34) mit mindestens einem hydraulischen Hubelement (1 bis 8) verbunden ist,
- bei dem mindestens eine der folgenden Sitzkenngrößen eingestellt wird:
- Sitzlänge;
- Sitzneigung, Sitzhöhe, Lehnenneigung;
- Lehnenkopf, Sitztiefe, Lehnenbreite;
- Lordose, Lordosentiefe, Lordosenhöhe;
- Kopfstütze,
wobei anhand des vom Nutzer ausgeübten Drucks auf den Sitz (201) ein aktuelles Druckprofil ermittelt wird, das mit einem vorgegebenen ergonomischen Druckprofil verglichen wird und der Sitz (201) in Richtung des ergonomischen Druckprofils verstell wird.

2. Verfahren nach Anspruch 1, bei dem mehrere Verstellmöglichkeiten des Sitzes als Gruppe zusammengefasst und gemeinsam verstellt werden.

3. Verfahren nach einem der vorhergehenden Ansprüche, bei dem die Einstellung des Sitzes wie folgt vorgenommen wird:
(a) Sitzhöhenverstellung,
(b) Sitzneigungsverstellung,
(c) Lehnenneigungsverstellung,
(d) Lehnenkopfverstellung.

4. Verfahren nach einem der vorherigen Ansprüche, das beim Einsteigen in ein Fahrzeug und/oder beim Öffnen des Fahrzeugs und/oder beim Annähern an das Fahrzeug gestartet wird.

5. Verfahren nach einem der vorherigen Ansprüche, das manuell oder automatisch während der Fahrt aktiviert wird.

6. Verfahren nach einem der vorherigen Ansprüche, bei dem der Sitz (201) ein elektrisch und/oder hydraulisch und/oder pneumatisch verstellbarer Sitz ist.

7. Verfahren nach einem der vorherigen Ansprüche, bei dem zwei Sensoren (31, 32) vorgesehen sind, die den Druck, der von einem Nutzer auf eine Rückenlehne (203) des Sitzes (201) ausgeübt wird, in räumlich getrennten Bereichen der Rückenlehne (203) erfassen.

8. Verfahren nach einem der vorherigen Ansprüche, bei dem zwei Sensoren (33, 34) vorgesehen sind, die den Druck, der von einem Nutzer auf ein Sitzkissen (202) des Sitzes (201) ausgeübt wird, in räumlich getrennten Bereichen des Sitzkissens (202) erfassen.

9. Verfahren nach einem der Ansprüche 1 bis 6, bei dem zwei Sensoren (31, 32) vorgesehen sind, die den Druck, der von einem Nutzer auf eine Rückenlehne (203) des Sitzes (201) ausgeübt wird, in räumlich getrennten Bereichen der Rückenlehne (203) erfassen sowie zwei weitere Sensoren (33, 34) vorgesehen sind, die den Druck, der von einem Nutzer auf ein Sitzkissen (202) des Sitzes (201) ausgeübt wird, in räumlich getrennten Bereichen des Sitzkissens (202) erfassen.

10. Verfahren nach einem der Ansprüche 7 bis 9,
- bei dem das Verhältnis des von den beiden Sensoren (31, 32 bzw. 33, 34) in der Rückenlehne (203) und/oder im Sitzkissen (202) erfassten Druckes ermittelt wird,
- bei dem dieses aktuelle Druckverhältnis mit einem vorgegebenen ergonomischen Druckverhältnis verglichen wird und
- bei dem der Sitz (201) so verstellt wird, dass sich das aktuelle Druckverhältnis dem ergonomischen Druckverhältnis annähert.

11. Verfahren nach einem der vorherigen Ansprüche, bei dem wenigstens je einem Hubelement (1 bis 8) im rechten und linken Teil von Rückenlehne (203) und/oder Sitzkissen (202) ein gemeinsamer Sensor (11 bis 18; 31 bis 34) zugeordnet ist.

12. Vorrichtung zur Anpassung eines Sitzes (101) umfassend eine Steuereinheit (22), die derart eingerichtet ist, dass ein Verfahren gemäß einem der vorhergehenden Ansprüche auf der Steuereinheit (22) ausführbar ist.

## Claims

1. A method for adjusting a seat (201)
- subject to a pressure exerted by a user on the seat (201),
- the pressure being determined by at least one pneumatic sensor (11 to 18; 31 to 34) and/or by at least one hydraulic sensor (11 to 18; 31 to 34),
- wherein a predetermined fill level is allocated to the at least one hydraulic lifting element (1 to 8) and/or to the at least one pneumatic lifting element (1 to 8) before the user exerts the pressure on the seat (201),
- wherein the seat (201) has a plurality of pneumatic sensors (11 to 18; 31 to 34) and/or hydraulic sensors (11 to 18; 31 to 34), at least one pneumatic sensor (11 to 18; 31 to 34) being connected to at least one pneumatic lifting element (1 to 8) and/or at least one hydraulic sensor (11 to 18; 31 to 34) being connected to at least one hydraulic lifting element (1 to 8),
- wherein at least one of the following seat parameters is set:
- seat length;
- seat tilt, seat height, backrest inclination;
- upper backrest, seat depth, backrest width;
- lumbar support, lumbar support depth, lumbar support height;
- headrest,
a current pressure profile being established based on the pressure exerted by the user on the seat (201), which current pressure profile is compared with a predetermined ergonomic pressure profile and the seat (201) is adjusted in the direction of the ergonomic pressure profile.

2. A method according to claim 1, wherein a plurality of adjustment options of the seat is combined as a group and is jointly adjusted.

3. A method according to either of the preceding claims, wherein the seat is adjusted as follows:
(a) seat height adjustment,
(b) seat tilt adjustment,
(c) backrest inclination adjustment,
(d) upper backrest adjustment.

4. A method according to any one of the preceding claims, which method is initiated upon entering a vehicle and/or upon opening the vehicle and/or upon approaching the vehicle.

5. A method according to any one of the preceding claims, which method is activated manually or automatically during travel.

6. A method according to any one of the preceding claims, wherein the seat (201) is an electrically and/or hydraulically and/or pneumatically adjustable seat.

7. A method according to any one of the preceding claims, wherein two sensors (31, 32) are provided which detect the pressure exerted by a user on a backrest (203) of the seat (201) in spatially separate regions of the backrest (203).

8. A method according to any one of the preceding claims, wherein two sensors (33, 34) are provided which detect the pressure exerted by a user on a cushion (202) of the seat (201) in spatially separate regions of the seat cushion (202).

9. A method according to any one of claims 1 to 6, wherein two sensors (31, 32) are provided which detect the pressure exerted by a user on a backrest (203) of the seat (201) in spatially separate regions of the backrest (203) and two further sensors (33, 34) are provided which detect the pressure exerted by a user on a cushion (202) of the seat (201) in spatially separate regions of the seat cushion (202).

10. A method according to any one of claims 7 to 9,
- wherein the ratio of the pressure detected by the two sensors (31, 32 and 33, 34) in the backrest (203) and/or in the seat cushion (202) is determined,
- wherein this current pressure ratio is compared with a predetermined ergonomic pressure ratio, and
- wherein the seat (201) is adjusted such that the current pressure ratio approximates the ergonomic pressure ratio.

11. A method according to any one of the preceding claims, wherein a common sensor (11 to 18; 31 to 34) is allocated to at least one respective lifting element (1 to 8) in the right-hand part and in the left-hand part of backrest (203) and/or seat cushion (202).

12. Device for adjusting a seat (101) comprising a control unit (22) which is configured such that a method according to any one of the preceding claims can be implemented on the control unit (22).

## Revendications

1. Procédé de réglage d'un siège (201),
- en fonction de la pression exercée par un utilisateur sur ce siège (201),
- cette pression étant détectée à partir d'au moins un capteur pneumatique (11 à 18, 31 à 34) et/ou d'au moins un capteur hydraulique (11 à 18, 31 à 34), selon lequel
- au moins un élément de levage hydraulique (1 à 8) et/ou au moins un élément de levage pneumatique (1 à 8) est établi à un niveau prédéfini ou à un niveau prédéfini avant que l'utilisateur n'exerce la pression sur le siège (201),
- le siège (201) comprend plusieurs capteurs pneumatiques (11 à 18, 31 à 34) et/ou plusieurs capteurs hydrauliques (11 à 18, 31 à 34), au moins un capteur pneumatique (11 à 18, 31 à 34) étant relié à au moins un élément de levage pneumatique (1 à 8) et/ou au moins un capteur hydraulique (11 à 18, 31 à 34) étant relié à au moins un élément de levage hydraulique (1 à 8),
- au moins l'une des caractéristiques du siège suivantes est réglée,
- longueur d'assise,
- inclinaison d'assise, hauteur d'assise, inclinaison du dossier,
- tête du dossier, profondeur d'assise, largeur du dossier,
- lordose, profondeur de lordose, hauteur de lordose,
- appui tête,
- à partir de la pression exercée sur le siège (201) par l'utilisateur, est déterminé un profil de pression actuel qui est comparé à un profil de pression ergonomique prédéfini, et le siège (201) est réglé dans le sens du profil de pression ergonomique.

2. Procédé conforme à la revendication 1,
selon lequel plusieurs possibilités de réglage du siège sont rassemblées en un groupe et réglées en commun.

3. Procédé conforme à l'une des revendications précédentes,
selon lequel le réglage du siège est effectué de la façon suivante :
(a) réglage de la hauteur d'assise,
(b) réglage de l'inclinaison d'assise,
(c) réglage de l'inclinaison du dossier,
(d) réglage de la tête du dossier.

4. Procédé conforme à l'une des revendications précédentes,
qui commence à être mis en oeuvre lors de la montée dans un véhicule et/ou lors de l'ouverture du véhicule et/ou lors de l'approche du véhicule.

5. Procédé conforme à l'une des revendications précédentes,
qui est activé manuellement ou automatiquement pendant le déplacement.

6. Procédé conforme à l'une des revendications précédentes,
selon lequel le siège (201) est un siège à réglage électrique et/ou hydraulique et/ou pneumatique.

7. Procédé conforme à l'une des revendications précédentes,
selon lequel il est prévu deux capteurs (31, 32) qui détectent la pression exercée par un utilisateur sur le dossier arrière (203) du siège (201) dans des zones séparées dans l'espace de ce dossier (203).

8. Procédé conforme à l'une des revendications précédentes,
selon lequel il est prévu deux capteurs (33, 34) qui détectent la pression qui est exercée par un utilisateur sur un coussin d'assise (202) du siège (201) dans des zones séparées dans l'espace de ce coussin de siège (202).

9. Procédé conforme à l'une des revendications 1 à 6,
selon lequel il est prévu deux capteurs (31, 32) qui détectent la pression exercée par un utilisateur sur le dossier arrière (203) du siège (201) dans des zones de ce dossier arrière (203) séparées dans l'espace, ainsi que deux autres capteurs (33, 34) qui détectent la pression exercée par un utilisateur sur un coussin d'assise (202) du siège (201) dans des zones séparées dans l'espace de ce coussin d'assise (202).

10. Procédé conforme à l'une des revendications 7 à 9,
selon lequel :
- le rapport de la pression détectée par les deux capteurs (31, 32 ou 33, 34) dans le dossier arrière (203) et/ou dans le coussin d'assise (202) est déterminé,
- ce rapport de pression actuel est comparé à un rapport de pression ergonomique prédéfini, et
- le siège (201) est réglé de sorte que le rapport de pression actuel s'approche du rapport de pression ergonomique.

11. Procédé conforme à l'une des revendications précédentes,
**caractérisé en ce qu'**
à au moins un élément de levage (1 à 8) dans la partie droite et gauche du dossier arrière (203) et/ou du coussin d'assise (202) est associé un capteur commun (11 à 18 ; 31 à 34).

12. Dispositif d'adaptation d'un siège (101) comprenant une unité de commande (22) réalisée de façon à pouvoir mettre en oeuvre un procédé conforme à l'une quelconque des revendications précédentes sur cette unité de commande (22).
